# EUROPÄISCHE PATENTSCHRIFT

(11) **EP 2 987 279 B1**
(45) Veröffentlichungstag und Bekanntmachung des Hinweises auf die Patenterteilung: **20.11.2019**
(21) Anmeldenummer: 14720484.6
(22) Anmeldetag: 14.04.2014
(51) Int. Cl.: H04L 12/28, H04L 12/40

(54) **GERÄT IN EINEM GEBÄUDESYSTEM UND SYSTEM DER GEBÄUDETECHNIK**
DEVICE IN A BUILDING SYSTEM AND BUILDING TECHNOLOGY SYSTEM
APPAREIL POUR SYSTÈME DOMOTIQUE ET SYSTÈME DOMOTIQUE

(30) Priorität: 19.04.2013 DE 102013006727
(43) Veröffentlichungstag der Anmeldung: 24.02.2016
(73) Patentinhaber: ABB AG, 68309 Mannheim (DE)
(72) Erfinder: KRUSE, Jörn, 68239 Mannheim (DE); WITTE, Sebastian, 68723 Plankstadt (DE)
(86) Internationale Anmeldenummer: PCT/EP2014/000988
(87) Internationale Veröffentlichungsnummer: WO 2014/170002

(56) Entgegenhaltungen:
- US-A1- 2005 216 302
- US-A1- 2012 254 427

## Beschreibung

Die Erfindung betrifft ein Gerät in einem Gebäudesystem, wobei das Gebäudesystem einen Feldbus umfasst, der mit mindestens einer Feldbuslinie ausgebildet ist, an die wenigstens ein Busgerät angeschlossen ist, wobei mittels eines dem Gebäudesystem übergeordneten Datennetzwerkes mindestens ein Client über eine Netzwerkverbindung auf den Feldbus zugreifen kann, gemäß dem Oberbegriff des Anspruchs 1.

Als Gebäudesystem oder auch System der Gebäudeautomation oder auch System der Gebäudetechnik bezeichnet man die Gesamtheit von Überwachungs-, Steuer-, Regel- und Optimierungseinrichtungen in einem Gebäude. Auch die Anwendung "energiedatenmanagement2 ist Teil eines Gebäudesystems. Es ist damit ein wichtiger Bestandteil des technischen Facilitymanagements. Ziel ist es, Funktionsabläufe gewerkeübergreifend selbstständig, weitgehend automatisch, nach vorgegebenen Einstellwerten, Parametern, durchzuführen oder deren Bedienung bzw. Überwachung zu vereinfachen. Alle Sensoren, Aktoren, Bedienelemente, Verbraucher und andere technische Einheiten im Gebäude werden miteinander vernetzt. Abläufe können in Szenarien zusammengefasst werden. Kennzeichnendes Merkmal ist die dezentrale Anordnung der Steuerungseinheiten sowie die durchgängige Vernetzung mittels eines Bussystems der Gebäudetechnik. Ein Bussystem der Gebäudetechnik ist ein Feldbussystem, das eine oder mehrere Feldbuslinien umfasst. Sensoren, Aktoren, Bedienelemente, Verbraucher sind als sogenannte Busgeräte an der oder den Feldbuslinien angeschlossen und bezüglich der Kommunikation über den Feldbus miteinander verbunden. Sind mehrere Feldbuslinien vorhanden, so können diese über einen als "Backbone" bezeichneten Kommunikationsbus miteinander verbunden sein. Jede Feldbuslinie hat dann einen sogenannten Router, der eine sogenannte Routing-Funktion zur Verfügung stellt, um die Informationen zwischen unterschiedlichen Feldbuslinien weiterzuleiten.

Heute ist es üblich, Informationen eines Gebäudes, die von dem Gebäudesystem bereitgestellt werden, in einem zentralen Server-System innerhalb oder außerhalb des Gebäudesystems zu verwalten und zu speichern. Unterschiedliche Clients können über ein übergeordnetes Datennetzwerk auf das zentrale Server-System zugreifen und von dem Server-System Informationen aus dem Gebäudesystem, aus den untergeordneten Feldbuslinien, abrufen. Beispiele für solche Clients sind ein Gebäudemanagementsystem, ein Visualisierungssystem, sogenannte Cloud-Devices, also Dienste, die über das Internet bereitgestellt werden, oder mobile Anzeige- und Bediengeräte, mobile Kommunikationseinrichtungen, auch als Smartphones bekannt. Wenn der Client Informationen aus untergeordneten Feldbuslinien abfragt, so veranlasst er über das Server-System und das Gateway das Feldbussystem, diese Informationen zur Verfügung zu stellen. Dazu wird eine entsprechende Kommunikation in dem Feldbussystem angestoßen, um die Information von den Busgeräten über die untergeordneten Feldbuslinien abzurufen.

Die Druckschrift US 2005 216 302 A1 offenbart ein netzbasiertes Verwaltungssystem in einem Gebäudesystem. In einem Beispiel für die Systemarchitektur wird ein System mit einem zentralen System-Gateway verwendet, um die verschiedenen Teil-Netzwerke zu verbinden. Dabei sind an einige der Teil-Netzwerke (LonWorks, GE Security) Busgeräte angeschlossen. Für einen Austausch von Daten dieser unterschiedlichen Geräte wird ein "abstraction layer" offenbart.

Die US 2012 254 427 A1 offenbart insbesondere Aspekte der Quality of Service Architektur eines Home Network. Entsprechend steuert ein "Home Agent (HA)" die Einhaltung von vordefinierten QoS-Parametern dadurch, dass die Erfordernisse an die Bandbreite einer Applikation übergeprüft werden und die Applikation nur dann freigegen wird, wenn die QoS-Parameter des Netzwerks dadurch nicht beeinträchtigt werden.

Ein solches zentrales Server-System läuft typischerweise auf einem zentralen Server-PC, beispielsweise als sog. OPC-Server. Als Speicher für Historieninformationen wird eine oder - aus Gründen der Datensicherheit - mehrere Festplatten verwendet.

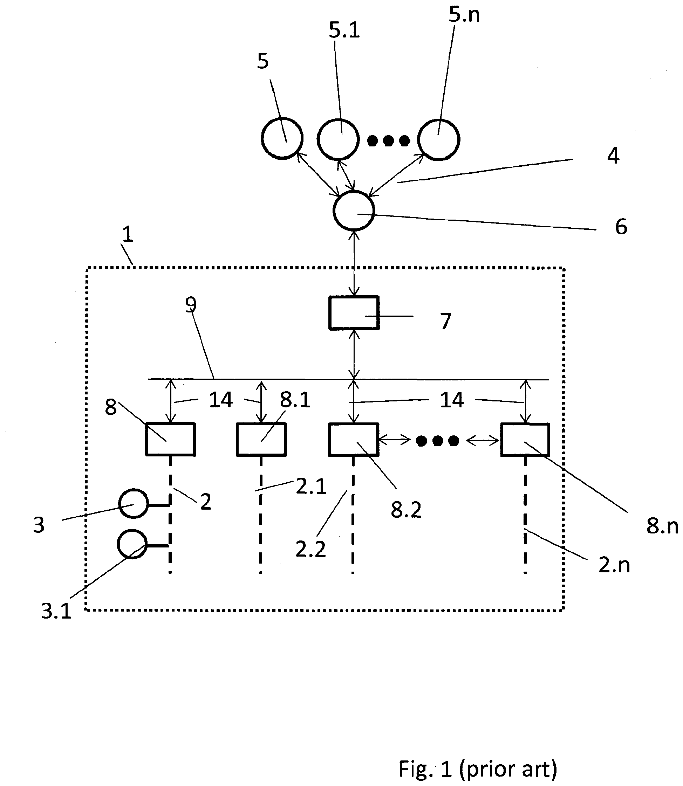

Der Server-PC muss in der Regel über ein Gateway mit dem Gebäudesystem verbunden werden, um die Informationen aus den untergeordneten Feldbuslinien dem Server-PC zuzuführen. Ein Gateway ist ein Protokollumsetzer, der Rechnernetzte miteinander verbindet, die auf unterschiedlichen Netzwerkprotokollen basieren. Ein Gateway setzt nur die Protokolle der Daten um, reicht die Datenpakete ansonsten einfach weiter. Figur 1 zeigt eine solche Systemlandschaft nach dem Stand der Technik.

Eine solche bekannte Systemkonfiguration hat verschiedene Nachteile.

Wenn sich mehrere Clients logisch mit dem Server-PC verbinden, kann es zu einer Überlastung der Kommunikation auf der Verbindung zwischen Server-PC und Client kommen. Insbesondere bei einer großen Zahl von mobilen Anzeige- und Bediengeräten, beispielsweise auch als Smartphones bezeichnet, kann eine große Zahl von gleichzeitigen Verbindungen auftreten.

Bei einer großen Anzahl von gleichzeitigen Anfragen von Clients kann es leicht zu einer Kommunikationsüberlastung in untergeordneten Feldbuslinien kommen, deren Übertragungsraten in der Regel beschränkt sind.

Bei einer Initialisierung des Server-PCs, z.B. nach einem Spannungsausfall, müssen alle von ihm verwalteten Informationen aus dem Gebäudesystem ausgelesen werden. Dies führt zu einer hohen und unsymmetrischen Kommunikationslast auf der Feldbusebene.

Der Aufwand zur Installation und zum Unterhalt eines Server-PCs, beispielsweise Investitionskosten, Energieverbrauch, Unterhalt, Wartung, Raum, Klimatisierung, etc., ist vergleichsweise hoch.

Bei Ausfall eines Servers-PC oder des Gateways oder des Kommunikationsweges zwischen beiden oder des Kommunikationsweges zwischen Routern kann ein Informationsverlust eintreten, weil die Router nur für die Informationsweiterleitung und - verteilung eingerichtet sind.

Die Bereitstellung von Projektierungsinformationen erfordert stets einen Export aus der Projektierungssoftware und einen Import in das Zielsystem, z.B. das Gebäudemanagementsystem. Dieser Vorgang ist aufwändig und fehleranfällig. Er muss nach jeder Änderung der Projektierung des Gebäudesystems erneut durchgeführt werden.

Es ist daher die der vorliegenden Erfindung zugrundeliegende Aufgabe, in einem System der Gebäudetechnik den Informationsaustausch zwischen den Clients des übergeordneten Datennetzwerks und den Feldbuslinien zu verbessern.

Die Aufgabe wird erfindungsgemäß gelöst, durch ein Gerät in einem Gebäudesystem mit den kennzeichnenden Merkmalen des Anspruchs 1. Weitere vorteilhafte Ausführungsformen des erfindungsgemäßen Gerätes sind in den Unteransprüchen beschrieben.

Ein erfindungsgemäßes Gerät hat einen Netzwerkanschluss zur Kommunikation mit wenigstens einem Client über eine Netzwerkverbindung, das Gerät hat eine Funktionsbaugruppe mit Server-Funktion, so dass das Gerät zur Bereitstellung von Informationen aus dem Feldbus an den wenigstens einen Client ausgebildet ist, das Gerät hat wenigstens einen Feldbusanschluss zur Kommunikation mit dem Feldbus, und das Gerät hat einen internen Speicher, der ein zumindest teilweises Prozessabbild der an den Feldbus angeschlossenen Feldbuslinie enthält.

Ein erfindungsgemäßes Gerät wirkt somit wie ein Datenserver, in den noch ein Speicher integriert ist, der ein zumindest teilweises Prozessabbild der an den Feldbus angeschlossenen Feldbuslinie enthält. Ein erfindungsgemäßes Gerät kommuniziert mit einem Client, um ihm Zugang zu speziellen Informationen aus dem Feldbus der Gebäudetechnik zu verschaffen. Dank des integrierten Speichers sind die von dem Client angefragten Informationen in dem Gerät vorhanden. Der Client muss zum Erhalt der Informationen nicht direkt auf den Feldbus zugreifen, wie es im Stand der Technik erforderlich ist. Der Zugriff des oder der Clients auf das Gerät ist entkoppelt von der Kommunikationsverbindung des Gerätes zu dem Feldbus.

Mit dem erfindungsgemäßen Gerät ist eine verteilte Serverstruktur realisierbar, die das zentrale Server-System mit seinen oben genannten Problemen entbehrlich macht. Einzelne Linien des untergeordneten Feldbussystems oder einzelne Router in dem untergeordneten Feldbussystem, die verschiedene untergeordnete Feldbuslinien kommunikationsseitig verbinden, sind an ihren jeweils eigenen dezentralen Server, ein erfindungsgemäßes Gerät, angeschlossen, die Clients verbinden sich jeweils mit demjenigen der verteilten Server, der zu der von ihnen gerade angefragten Feldbuslinie gehört. Durch das Verteilen der Serverfunktion weg von einem zentralen Server hin zu mehreren verteilten Servern ist die Kommunikation und der Datenaustausch zwischen den Clients und den einzelnen Linien des untergeordneten Feldbussystems stark vereinfacht.

Das erfindungsgemäße Gerät ist ein Gerät zum Einsatz in einem Gebäudesystem. Es kann konzipiert sein, um in Reihe mit anderen Geräten der Gebäudesystemtechnik auf einer Normprofiltragschiene in einem Elektroinstallationsverteiler angebracht zu werden. Dazu hat das Gehäuse des Gerätes dann an seiner Befestigungsseite entsprechende Vorrichtungen, meistens ist da eine im Prinzip bekannte Nut mit schräg eingekerbten Wänden, die dadurch zwei Befestigungsnasen bilden, mit denen das Gerät hinter die freien Schenkel einer Normprofiltragschiene, beispielsweise einer Hutprofiltragschiene, aufgerastet werden kann. Eine der Nasen ist dabei meistens als feststehende Nase und die andere Nase ist meistens als bewegliche Nase ausgebildet. Das Gerät ist somit mit einem Gehäuse in der Form eines Reiheneinbaugerätes der Gebäudeinstallationstechnik ausgebildet. Da es die Funktion eines Datenservers erfüllt, und als Reiheneinbaugerät der Gebäudesystemtechnik ausgeführt ist, wird es im Folgenden auch als GST-Datenserver bezeichnet, wobei GST die Abkürzung ist für GebäudeSystemTechnik.

Das erfindungsgemäße Gerät hat einen Netzwerkanschluss zur Kommunikation mit übergeordneten bzw. benachbarten Systemen, sogenannten Clients. Ein Client kann dabei eine Punkt-zu-Punkt Kommunikationsverbindung zu einem erfindungsgemäßen GST-Datenserver aufbauen.

Das erfindungsgemäße Gerät hat einen oder mehrere Anschlüsse für in der Gebäudesystemtechnik übliche Feldbusse, z.B. KNX/TP, LON, Modbus, CAN, Ethernet, Powerline, Funk, etc.).

Das erfindungsgemäße Gerät hat einen internen Speicher, der unter anderem ein vollständiges oder teilweises Prozessabbild der untergeordneten Linien enthält.

Gemäß einer vorteilhaften Ausführungsform der Erfindung kann das erfindungsgemäße Gerät neben der Server-Funktion zusätzlich auch eine Routing-Funktion besitzen, um Informationen zwischen mehreren angeschlossenen Feldbus-Kommunikationslinien weiterzuleiten. Die Weiterleitung kann zum einen zu Feldbuslinien, die an dieses Gerät angeschlossen sind, erfolgen. Zum anderen leitet der Router die Informationen zu anderen Routern weiter, die sie an die dort angeschlossenen Feldbuslinien verteilen.

In einem erfindungsgemäßen Gerät gemäß dieser Ausführungsform kann der Router dabei denselben internen Datenspeicher des GST-Datenservers nutzen.

Kernfunktion des erfindungsgemäßen GST-Datenservers ist es, Clients, die über LAN logisch mit dem Gerät verbunden sind, Informationen aus den untergeordneten Feldbussen bereitzustellen. Beispiele für Clients sind:
- Building Management Systeme,
- Visualisierungen bzw. Visualisierungssysteme,
- Cloud-Services, d.h. Dienste, die über das Internet bereitgestellt werden,
- Smartphones.

Die Bereitstellung der Informationen kann z.B. über standardisierte Protokolle, wie beispielsweise BacNet, OPC, erfolgen. Der Zugriff kann auch aus der Ferne erfolgen.

Unter bereitgestellten Informationen, die aus dem oder den untergeordneten Feldbussen an den oder die Clients bereitzustellen sind und bereitgestellt werden, kann man exemplarisch die im Folgenden beschriebenen Informationen verstehen.

### a) Runtime-Informationen

Diese umfassen aktuelle Zustandsinformationen des Gebäudesystems, d.h. Zustandsinformationen von im oder am Gebäude befindlichen Geräten oder technischen Einrichtungen, wie beispielsweise Sensoren oder Aktoren. Wenn das Gebäudesystem mit einem Feldbus gemäß dem KNX-Standard ausgestattet ist, so sind solche Runtime-Informationen beispielsweise die Zustände der Gruppenadressen, Group Objects, also Kommunikationsobjekte, oder Interface-Objects.

### b) Historieninformationen

Diese umfassen aufgezeichnete Runtime-Informationen sowie aufgezeichnete Datentelegramme der Feldbuslinien, Ereignisse oder Diagnoseinformationen. Historieninformationen können zusammen mit einem Zeitstempel, also beispielsweise Uhrzeit und Datum, gespeichert sein.

### c) Projektierungsinformationen

Heutige Feldbusse der Gebäudesystemtechnik verfügen häufig über Projektierungswerkzeuge, mit denen der Aufbau und die Eigenschaften des Gebäudesystems festgelegt werden. Die Projektierungswerkzeuge dienen oftmals dazu, die Funktion der Feldgeräte festzulegen und in die Geräte hineinzuladen. Ein Beispiel für ein Projektierungswerkzeug ist die Software ETS des Feldbussystems KNX.

In der Regel werden bei der Programmierung der Feldgeräte durch das Projektierungswerkzeug nicht alle Projektierungsinformationen in die Feldgeräte geladen und sind daher nach der Entfernung des Projektierungswerkzeugs vom Feldbus nicht mehr direkt verfügbar. Sie können somit nur unter relativ hohem Aufwand via Export/Import von Clients genutzt werden.

Beispiele für Projektierungsinformationen sind:
- Rauminformationen und Gebäudestruktur
- Position, beispielsweise Einbauort oder Feldbustopologiezuordnung, und Art der Feldgeräte
- Topologie des Feldbussystem
- Informationen zu Datenpunkten, wie z.B. Gewerk, Beschreibung, Kommunikationseigenschaften

### d) Diagnoseinformationen

Diese umfassen Informationen, die zur Diagnose des Systemzustands genutzt werden, wie z.B. Busspannung, Kommunikationsausfall, Zustandsinformationen zu den Feldgeräten.

Die bereitgestellten Informationen können ganz oder teilweise im GST-Datenserver zwischengespeichert werden. Der GST-Datenserver kann somit ein komplettes und aktuelles Prozessabbild nach außen zu den Clients hin bereitstellen, ohne dass Informationen aus den untergeordneten Feldbussystemen ausgelesen werden müssen.

Der erfindungsgemäße GST-Datenserver ist so ausgebildet, dass er den Clients die Projektierungsinformation derart zur Verfügung stellt, dass die Datenpunkte auf einfache Weise den Räumen oder technischen Einrichtungen oder Gewerken oder Funktionen zugeordnet werden können.

In Feldbussystemen können besondere Betriebszustände zu einer hohen Kommunikationslast auf den Feldbuslinien führen. Dies kann einen Informationsverlust zur Folge haben. Beispiele für besondere Betriebszustände sind:
- Der Ausfall oder die Wiederkehr der Netzspannung im gesamten oder einem Teil des Gebäudesystems
- Einschalten/Anschließen von Clients
- Programmiervorgänge

Weiterhin kann eine hohe Anzahl von Sendern in anderen Feldbuslinien, z.B. Statusmeldungen nach Zentralbefehlen, zu einer Überlastung der Kommunikation in einer anderen Feldbuslinie führen, sofern die Informationen ungehindert in diese Linie geroutet werden.

Der erfindungsgemäße GST-Datenserver ist so ausgebildet, dass er die Kommunikation auf den untergeordneten Feldbuslinien über geeignete Maßnahmen, z.B. verzögertes Senden von Anfragen, Zwischenspeicherung von Informationen, derart beeinflussen kann, dass die Kommunikationslast, also beispielsweise die Anzahl der Telegramme pro Zeit, begrenzt und somit eine Überlastung verhindert wird. Der erfindungsgemäße GST-Datenserver ist dazu mit einer Funktionsbaugruppe mit Kommunikationssteuerungsfunktion ausgebildet. Diese kann als Softwaremodul ausgeführt sein.

Der GST-Datenserver kann durch integrierte Sicherheitsmechanismen den unbefugten Zugriff auf Informationen und Funktionen des Gebäudesystems verhindern. Zu den Sicherheitsmechanismen zählen beispielsweise:
- verschlüsselter Informationsaustausch und Sicherung des Übertragungskanals zwischen Clients und dem GST-Datenserver sowie zwischen zwei oder mehreren GST-Datenservern.
- Authentifizierung von Clients und GST-Datenservern
- Zugriffsschutz und Verschlüsselung der auf dem GST-Datenserver gespeicherten Daten
- Verhinderung von bzw. Abschirmung des Feldbussystems gegenüber Denial of Service-Attacken
- Firewall-Funktion, d.h. Zugriff zu bestimmten Services erlauben und verbieten

Der erfindungsgemäße GST-Datenserver ist in einer Ausführungsvariante auch zur Überwachung der untergeordneten Feldbusgeräte auf Präsenz und ordnungsgemäße Funktion eingerichtet.

Der erfindungsgemäße GST-Datenserver ist in einer Ausführungsvariante auch zu einer automatischen Neuprogrammierung von Geräten, nachdem diese ausgetauscht wurden, eingerichtet.

Insgesamt betrachtet zeichnet sich ein erfindungsgemäßer GST-Datenserver dadurch aus, dass er Proxy-Mechanismen verwendet, sich wie ein Proxy-Server verhält. Ein Proxy ist bekanntermaßen eine Kommunikationsschnittstelle in einem Netzwerk, die als Vermittler von Datenpaketen arbeitet. Der Proxy nimmt auf der einen Seite Anfragen entgegen, um dann über seine eigene Adresse eine Verbindung zur anderen Seite herzustellen. Ein Proxy-Server ist in der Lage, im Unterschied zu einer einfachen Adressenumsetzung, die Kommunikation selbst zu führen und zu beeinflussen, anstatt die Datenpakete ungesehen weiterzugeben. Er kann beispielsweise die Daten zusammenhängend analysieren, Anfragen filtern, bei Bedarf Anpassungen vornehmen, oder auch entscheiden, ob und in welcher Form die Antwort des Ziels an den Client weitergereicht wird.

Die oben beschriebenen besonderen Ausführungsmöglichkeiten des erfindungsgemäßen GST-Datenservers lassen sich daher so zusammenfassen: der erfindungsgemäße GST-Datenserver ist ein Datenserver mit Proxy-Funktionalität, der als Reiheneinbaugerät ausgeführt sein kann. Im Folgenden wird er daher auch gelegentlich kurz als Proxy bezeichnet.

In einem Gebäudesystem können mehrere erfindungsgemäße GST-Datenserver gleichzeitig vorhanden sein. In diesem Fall können die GST-Datenserver Informationen untereinander derart austauschen, dass Anfragen eines Clients, zu Informationen, die in einem anderen Proxy vorliegen, an diesen weitergegeben werden. Der vom Client angefragte Proxy beantwortet abschließend die Anfrage.

Wenn mehrere GST-Datenserver in einem Gebäudesystem vorhanden sind, können sich diese untereinander kontinuierlich ganz oder teilweise synchronisieren, so dass die gespeicherten Informationen ganz oder teilweise gleich sind. Die daraus folgende Redundanz der Informationen erhöht die Datensicherheit gegen einen Geräteausfall. Eine solche Datensynchronisierung kann auch nur zwischen einem Teil der GST-Datenserver stattfinden.

Die Synchronisierung zwischen GST-Datenservern kann auch die Zugriffsrechte beinhalten, d.h. z.B. wenn sich die Authentifizierungsdaten eines Clients ändern, wird dies über geeignete Mechanismen auch an die anderen GST-Datenserver kommuniziert.

Die Einstellung der Betriebsparameter des GST-Datenservers kann über eine PC-Software oder über eine Erweiterung des Projektierungswerkzeugs, z.B. über ein sog. Plug-In, erfolgen.

Sofern mehrere Clients eine Kommunikationsverbindung zu einem GST-Datenserver aufbauen, kann dies zu einer hohen Auslastung des GST-Datenservers führen. Um die Auslastung der GST-Datenservern auszugleichen, können die GST-Datenserver eine Verbindung zu einem Client an einen anderen GST-Datenserver weitervermitteln.

Die in einem erfindungsgemäßen GST-Datenserver gespeicherten Informationen können sich auf die an den GST-Datenserver angeschlossenen Feldbuslinien beschränken.

Ein einzelner Client am Datennetzwerk kann sich über eine Punkt-zu-Punkt-Verbindung mit genau einem GST-Datenserver verbinden. Über diese Verbindung erhält er Zugriff auf alle Informationen und Dienste des Gebäudesystems. Sofern ein GST-Datenserver diese Informationen nicht selbst gespeichert hat, kann er sie von einem anderen Proxy ermitteln und an den Client weitergeben.

Zwischen den GST-Datenservern erfolgt eine Synchronisierung der Uhrzeit. Alle Informationen können in den GST-Datenservern somit zusammen mit einem eindeutigen Zeitstempel gespeichert werden. Dies ermöglicht es den GST-Datenservern, die Informationen untereinander kontinuierlich zu synchronisieren, indem diejenigen Daten mit dem neuesten Zeitstempel beibehalten werden. Dies bezieht sich auch auf die Zugangsdaten zum Anmelden am Gebäudesystem.

Mehrere Clients können sich gleichzeitig mit dem Gebäudesystem verbinden; die Kommunikationslast wird auf mehrere GST-Datenserver aufgeteilt. Mithilfe eines Vermittlungsmechanismus zwischen den GST-Datenservern kann die Verbindung zu dem GST-Datenserver mit der geringsten Auslastung vermittelt werden, beispielsweise unter Verwendung einer virtuellen IP-Adresse. Der Vermittlungsmechanismus kann bei Ausfall eines GST-Datenservers die automatische Weiterleitung zu einem aktiven GST-Datenserver sicherstellen.

Die Erfindung sowie weitere Ausführungsmöglichkeiten und Vorteile der Erfindung soll jetzt anhand der Figuren weiter erläutert werden.

Es zeigen:
- Fig. 1: ein Gebäudesystem mit übergeordnetem Datennetzwerk gemäß dem Stand der Technik,
- Fig. 2: ein Gebäudesystem mit erfindungsgemäßen Geräten,
- Fig. 3: ein Blockschema eines erfindungsgemäßen Gerätes in einer ersten Ausführungsform,
- Fig. 4: ein Blockschema eines erfindungsgemäßen Gerätes in einer zweiten Ausführungsform,

In den Figuren sind gleiche oder gleichwirkende Komponenten, Baugruppen oder dergleichen mit denselben Bezugsziffern bezeichnet.

Die Figur 1 zeigt ein Gebäudesystem 1, das einen Feldbus umfasst, der mit verschiedenen Feldbuslinien, hier sind vier Feldbuslinien 2, 2.1, 2.2, 2.n dargestellt, ausgebildet ist. Bei dem Feldbus in dem Gebäudesystem 1 kann es sich beispielsweise um einen KNX Bus handeln. An jede Feldbuslinie ist wenigstens ein Busgerät angeschlossen, hier ein Busgerät mit KNX-Busschnitstelle. Exemplarisch, nicht beschränkend gemeint, ist hier dargestellt, dass an die Feldbuslinie 2 zwei Feldbusgeräte 3, 3.1 angeschlossen sind. Jede der Feldbuslinien 2, 2.1, 2.2, 2.n ist an einen Router 8, 8.1, 8.2, 8.n angeschlossen. Zwischen den Routern besteht eine Kommunikationsverbindung 9, die als Backbone, englisch für Rückgrat, bezeichnet wird. Jeder Router stellt zu dem Backbone 9 eine Routing-Verbindung 14 her. Informationen können so zwischen den verschiedenen Feldbuslinien ausgetauscht werden.

Weiter ist das Gebäudesystem 1 nach dem Stand der Technik mit einem Gateway 7 ausgebildet. Ein Gateway ist ein Protokollumsetzer, der Rechnernetzte miteinander verbindet, wobei er nur die Protokolle umsetzt, ansonsten die Datenpakete aber einfach weiterreicht. Hier verbindet der Gateway 7 den Feldbus des Gebäudesystems 1 mit einem zentralen Server-PC 6 außerhalb des Gebäudesystems 1. Auf dem zentralen Server-PC 6 werden Informationen des Gebäudesystems 1, Informationen aus den Feldbuslinien des Feldbussystems im Gebäudesystem 1, gespeichert und verwaltet.

Der Server-PC 6 ist in ein übergeordnetes Datennetzwerk eingebunden, beispielsweise ein Local Area Network (LAN) oder das Internet. Über Netzwerkverbindungen 4 des übergeordneten Datennetzwerkes kann sich mindestens ein Client 5, 5.1, 5.n mit dem Server-PC verbinden. Der Client 5, 5.1, 5.n kann auf diese Weise Zugang erhalten zu Informationen aus dem Gebäudesystem, die auf dem zentralen Server-PC gespeichert und verwaltet sind. Der Client 5, 5.1, 5.n kann über die Netzwerkverbindung 4, den zentralen Server-PC 6, das Gateway 7 auf den Feldbus des Gebäudesystems 1 zugreifen.

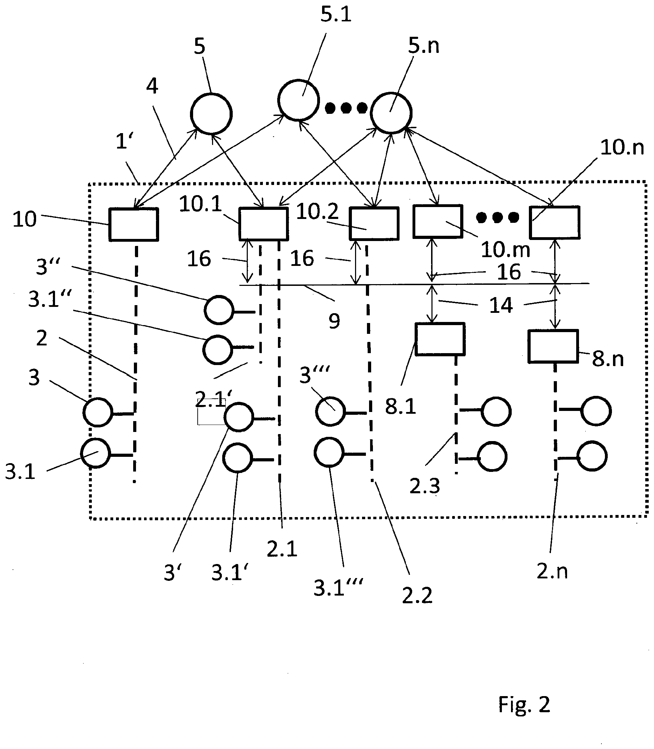

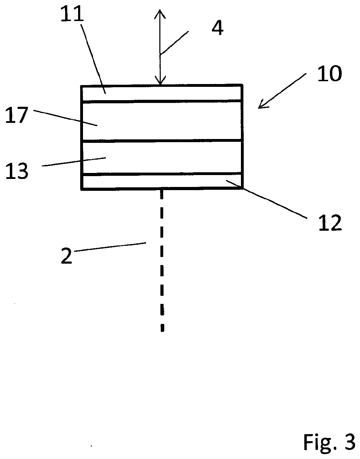

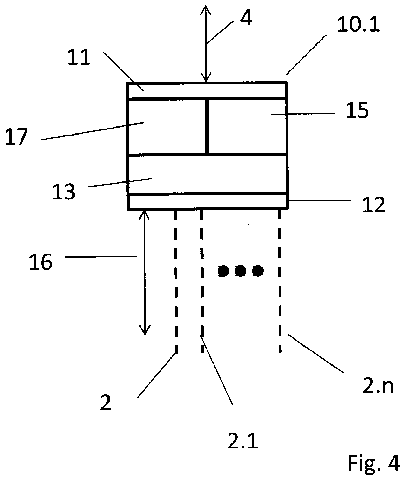

Es werde nun die Figur 2 betrachtet. Die Figur 2 zeigt ein Gebäudesystem 1' gemäß der Erfindung, ebenfalls ein übergeordnetes Datennetzwerk, angedeutet durch die Netzwerkverbindungen 4, und verschiedene Clients 5, 5.1, 5.n. Das Gebäudesystem 1' ist ebenfalls mit mehreren Feldbuslinien 2, 2.1, 2.1', 2.2, 2.3, 2.n gebildet, wobei an jeder Feldbuslinie eines oder mehrere Busgeräte 3, 3.1, 3.1', 3', 3", 3.1", 3"', 3.1"' und noch andere, als Kreis dargestellte aber nicht mit Bezugszeichen versehene, angeschlossen sind. Auch hier in Fig. 2 können die Clients 5, 5.1, 5.n auf den Feldbus des Gebäudesystems 1' zugreifen. Doch das erfindungsgemäße Gebäudesystem 1' hat kein Gateway mehr, und es gibt keinen zentralen Server-PC. Stattdessen hat das erfindungsgemäße Gebäudesystem 1' mehrere erfindungsgemäße, als GST-Datenserver bezeichnete Geräte 10, 10.1, 10.2, 10.m, 10.n. Die erfindungsgemäßen Geräte werden unten im Zusammenhang mit den Figuren 3 und 4 in ihrer schematischen Funktion genauer beschrieben. Hier sei angemerkt, dass durch den Einsatz der erfindungsgemäßen GST-Datenserver 10, 10.1, 10.2, 10.m, 10.n in dem Gebäudesystem 1' ein Gebäudesystem mit einer verteilten Server-Struktur geschaffen wurde, wobei sich jeder der verteilten GST-Datenserver dadurch auszeichnet, dass er Proxy-Mechanismen verwendet.

Es werde nun die Figur 3 betrachtet. Diese zeigt schematisch und exemplarisch ein erfindungsgemäßes Gerät 10, einen GST-Datenserver. Das Gerät 10 hat einen Netzwerkanschluss 11 zur Kommunikation mit wenigstens einem Client , siehe in Figur 2 die Bezugsziffern 5, 5.1, 5.n, über eine Netzwerkverbindung 4. Das Gerät 10 hat eine Funktionsbaugruppe 17 mit Server-Funktion unter Verwendung von Proxy-Mechanismen, so dass das Gerät 10 zur Bereitstellung von Informationen aus dem Feldbus an den wenigstens einen Client ausgebildet ist. Das Gerät 10 hat wenigstens einen Feldbusanschluss 12 hat zur Kommunikation mit dem Feldbus. Das Gerät 10 hat ferner einen internen Speicher 13, der ein zumindest teilweises Prozessabbild der an den Feldbus angeschlossenen Feldbuslinie, siehe in Fig. 2 die Feldbuslinie 2, enthält.

Das Gerät 10 umfasst einen Mikroprozessor mit Programmspeicher. Die Serverfunktion ist als Server-Software implementiert und läuft auf dem Mikroprozessor. Auch die oben erwähnte Kommunikationssteuerungsfunktion ist als Software-Baustein implementiert und läuft auf dem Mikroprozessor des Gerätes 10.

Die Funktionsbaugruppe 17 mit Serverfunktion ist ein Mikroprozessor mit Programmspeicher, auf dem eine entsprechende server-Software implementiert ist und läuft. Nicht in den Figuren dargestellt, aber leicht vorstellbar, ist, dass das Gerät 10 in einem Gehäuse in der Form eines Reiheneinbaugerätes der Elektroinstallation ausgebildet ist. Es läßt sich mit anderen Reiheneinbaugeräten, wie KNX-Schaltaktoren, Netzgeräten, Routern oder dergleichen auf beispielsweise einer Normprofiltragschiene in einem Installationsverteiler anbringen.

Es werde nun die Figur 4 betrachtet. Dort ist eine Variante eines erfindungsgemäßen GST-Datenservers 10.1 schematisch dargestellt. Das Gerät 10.1 nach Figur 4 unterscheidet sich von dem Gerät 10 nach Figur 3 dadurch, dass das Gerät 10.1 zusätzlich zu allem, was das Gerät 10 nach Figur 3 hat, noch eine Funktionsbaugruppe 15 mit Routing-Funktion umfasst, um Informationen zwischen unterschiedlichen Feldbuslinien 2, 2.1, 2.n. weiterzuleiten. Die Weiterleitung kann zum einen zu Feldbuslinien 2, 2.1, 2.n, die an dieses Gerät 10.1 angeschlossen sind, erfolgen. Zum anderen kann der integrierte Router 15 die Informationen zu anderen Routern weiter, die sie an die dort angeschlossenen Feldbuslinien verteilen. Siehe dazu in Figur 2 die Router 8.1 und 8.n, an denen weitere Feldbuslinien 2.3 und 2.n angeschlossen sind. Der GST-Datenserver 10.1 hat dazu eine Synchronisationsverbindung 16 zur Synchronisation mit anderen Routern. Wie Figur 2 zeigt, erfolgt die Synchronisation über die Backbone-Kommunikationsverbindung 9.

Der integrierte Router 15 nutzt dabei denselben internen Datenspeicher 13 des GST-Datenservers 10.1. Auch der Router 15 ist als Software-Funktion realisiert und läuft auf dem Mikroprozessor des Gerätes 10.1.

Es werde nun wieder die Figur 2 betrachtet. Hier sind exemplarisch verschiedene Verwendungsmöglichkeiten der erfindungsgemäßen Gerätevarianten nach den Figuren 3 und 4 in einem Gebäudesystem gezeigt, was selbstverständlich nur exemplarisch gemeint ist und nicht abschließend oder in irgend einer anderen Art beschränkend. Der GST-Server 10, links, ist aufgebaut wie in Figur 3 beschrieben, ohne Router.

Die GST-Server 10.1, 10.2, 10.m, 10.n sind aufgebaut wie in Figur 4 beschrieben, mit integriertem Router, um Informationen zwischen mehreren angeschlossenen Feldbus-Kommunikationslinien weiterzuleiten. Die Weiterleitung kann zum einen zu Feldbuslinien, die an dieses Gerät angeschlossen sind, erfolgen, siehe die Linien 2.1' und 2.1, die an dem Gerät 10.1 angeschlossen sind. Zum anderen leitet der integrierte Router die Informationen zu anderen Routern weiter, die sie an die dort angeschlossenen Feldbuslinien verteilen. Der integrierte Router in einem der Geräte 10.1, 10.2, 10.m, 10.n leitet beispielsweise weiter an den Router 8.1, an dem die Feldbuslinie 2.3 angeschlossen ist, und zu dem Router 8.n, an dem die Feldbuslinie 2.n angeschlossen ist.

In dem Gebäudesystem 1' sind also mehrere erfindungsgemäße GST-Datenserver, auch als Proxy bezeichnet, 10, 10.1, 10.2, 10.m, 10.n gleichzeitig vorhanden. Die GST-Datenserver (Proxys) können Informationen untereinander derart austauschen, dass Anfragen eines Clients, beispielsweise des Clients 5.n, zu Informationen, die in einem anderen Proxy vorliegen, an diesen weitergegeben werden. Der vom Client angefragte Proxy beantwortet abschließend die Anfrage.

Mehrere GST-Datenserver 10.1, 10.2, 10.m, 10.n in dem Gebäudesystem 1' können sich untereinander kontinuierlich ganz oder teilweise synchronisieren, unter Nutzung der Synchronisationsverbindung 16 und des Backbones 9, so dass die gespeicherten Informationen ganz oder teilweise gleich sind. Die daraus folgende Redundanz der Informationen erhöht die Datensicherheit gegen einen Geräteausfall. Eine solche Datensynchronisierung kann auch nur zwischen einem Teil der GST-Datenserver, etwa zwischen 10.1 und 10.2, stattfinden.

Die Synchronisierung zwischen GST-Datenservern kann auch die Zugriffsrechte beinhalten, d.h. z.B. wenn sich die Authentifizierungsdaten eines Clients ändern, wird dies über geeignete Mechanismen auch an die anderen GST-Datenserver kommuniziert.

Die Einstellung der Betriebsparameter jedes des GST-Datenserver kann über eine PC-Software oder über eine Erweiterung des Projektierungswerkzeugs, z.B. über ein sog. Plug-In, erfolgen.

Sofern mehrere Clients 5.1, 5.n eine Kommunikationsverbindung zu einem GST-Datenserver 10.2 aufbauen, kann dies zu einer hohen Auslastung des GST-Datenservers 10.2 führen. Um die Auslastung der GST-Datenserver auszugleichen, kann der GST-Datenserver 10.2 eine Verbindung zu einem Client, beispielsweise zu 5.n, an einen anderen GST-Datenserver, beispielsweise an 10.m, weitervermitteln.

Die in einem erfindungsgemäßen GST-Datenserver gespeicherten Informationen können sich auf die an den GST-Datenserver angeschlossenen Feldbuslinien beschränken. Beispiel hierfür ist die links gezeigte Feldbuslinie 2 an dem GST-Datenserver 10.

Ein einzelner Client am Datennetzwerk kann sich über eine Punkt-zu-Punkt-Verbindung mit genau einem GST-Datenserver verbinden. Über diese Verbindung erhält er Zugriff auf alle Informationen und Dienste des Gebäudesystems. Sofern ein GST-Datenserver diese Informationen nicht selbst gespeichert hat, kann er sie von einem anderen Proxy ermitteln und an den Client weitergeben.

Zwischen den GST-Datenservern erfolgt eine Synchronisierung der Uhrzeit, über die Synchronisationsverbindung 16. Alle Informationen können in den GST-Datenservern somit zusammen mit einem eindeutigen Zeitstempel gespeichert werden. Dies ermöglicht es den GST-Datenservern, die Informationen untereinander kontinuierlich zu synchronisieren, indem diejenigen Daten mit dem neuesten Zeitstempel beibehalten werden. Dies bezieht sich auch auf die Zugangsdaten zum Anmelden am Gebäudesystem.

Mehrere Clients 5, 5.1, 5.n können sich gleichzeitig mit dem Gebäudesystem 1' verbinden; die Kommunikationslast wird auf mehrere GST-Datenserver 10, 10.1, 10.2, 10.m, 10.n aufgeteilt. Mithilfe eines Vermittlungsmechanismus zwischen den GST-Datenservern kann die Verbindung zu dem GST-Datenserver mit der geringsten Auslastung vermittelt werden, beispielsweise unter Verwendung einer virtuellen IP-Adresse. Der Vermittlungsmechanismus kann bei Ausfall eines GST-Datenservers die automatische Weiterleitung zu einem aktiven GST-Datenserver sicherstellen.

### Bezugszeichenliste

- 1: Gebäudesystem oder Gebäudeteilsystem
- 1': Gebäudesystem oder Gebäudeteilsystem
- 2: Feldbuslinie
- 2.1: Feldbuslinie
- 2.2: Feldbuslinie
- 2.n: Feldbuslinie
- 3: Busgerät
- 3.1: Busgerät
- 3': Busgerät
- 3.1': Busgerät
- 3": Busgerät
- 3.1": Busgerät
- 3"': Busgerät
- 3.1"': Busgerät
- 4: Netzwerkverbindung
- 5: Client, z.B. Building Management System
- 5.1: Client, z.B. Visualisierungssystem
- 5.n: Client, z.B. Smartphone
- 6: Server-PC
- 7: Gateway
- 8: Router
- 8.1: Router
- 8.2: Router
- 8.n: Router
- 9: Backbone
- 10: Gerät
- 10.1: Gerät
- 10.2: Gerät
- 10.n: Gerät
- 11: Netzwerkanschluss
- 12: Feldbusanschluss
- 13: interner Speicher
- 14: Routing-Verbindung zwischen Routern
- 15: Funktionsbaugruppe mit Routing-Funktion
- 16: Synchronisationsverbindung zwischen GST-Datenservern
- 17: Funktionsbaugruppe mit Server-Funktion

## Patentansprüche

1. Gerät (10, 10.1, 10.2, 10.m, 10.n) zur Realisierung einer verteilten Serverstruktur in einem Gebäudesystem (1),
wobei das Gebäudesystem (1) einen Feldbus umfasst, der mit mindestens einer Feldbuslinie (2, 2.1, 2.2, 2.n) ausgebildet ist, an die wenigstens ein Busgerät (3, 3.1) angeschlossen ist, wobei mittels eines dem Gebäudesystem (1) übergeordneten Datennetzwerkes mindestens ein Client (5, 5.1, 5n) über eine Netzwerkverbindung (4) auf den Feldbus zugreifen kann, wobei
das Gerät einen Netzwerkanschluss (11) hat zur Kommunikation mit wenigstens einem Client (5, 5.1, 5.n) über eine Netzwerkverbindung (4),
das Gerät eine Funktionsbaugruppe (17) mit Server-Funktion hat, so dass das Gerät zur Bereitstellung von Informationen aus dem Feldbus an den wenigstens einen Client (5, 5.1, 5.n) ausgebildet ist,
das Gerät (10, 10.1, 10.2, 10.m, 10.n) wenigstens einen Feldbusanschluss (12) hat zur Kommunikation mit dem Feldbus, und
das Gerät (10, 10.1, 10.2, 10.m, 10.n) einen internen Speicher (13) hat, der ein zumindest teilweises Prozessabbild der an den Feldbus angeschlossenen Feldbuslinie (2, 2.1, 2.2, 2.n) enthält,
**dadurch gekennzeichnet, dass**
das Gerät (10) eine Synchronisationsverbindung (16) aufweist, unter Nutzung derer sich Geräte (10, 10.1, 10.2, 10.m, 10.n) in dem Gebäudesystem (1') untereinander kontinuierlich ganz oder teilweise synchronisieren, so dass die gespeicherten Informationen ganz oder teilweise gleich sind.

2. Gerät (10, 10.1, 10.2, 10.m, 10.n) nach Anspruch 1,
**dadurch gekennzeichnet, dass** der Netzwerkanschluss (11) ein LAN-Anschluss ist, insbesondere ein Ethernet-Anschluss.

3. Gerät (10, 10.1, 10.2, 10.m, 10.n) nach Anspruch 1,
**dadurch gekennzeichnet, dass** der Feldbusanschluss (11) ein KNX-Anschluss ist, oder ein LON-Anschluss, oder ein CAN-Anschluss, oder ein Ethernet-Anschluss, oder ein Powerline-Anschluss, oder ein Funk- oder ein EIA 485-Anschluss.

4. Gerät (10, 10.1, 10.2, 10.m, 10.n) nach einem der vorigen Ansprüche,
**dadurch gekennzeichnet, dass** in dem internen Speicher (13) Informationen, die von der oder den untergeordneten Feldbuslinien (2, 2.1, 2.2, 2.n) bereitgestellt sind, zwischengespeichert sind, und dass das Gerät (10) diese Informationen über den Netzwerkanschluss (11) an Clients (2, 2.1, 2.2, 2.n), die über das übergeordnete Datennetzwerk (4) angeschlossen sind, bereitstellt.

5. Gerät (10, 10.1, 10.2, 10.m, 10.n) nach Anspruch 4,
**dadurch gekennzeichnet, dass** die Informationen, die von der oder den untergeordneten Feldbuslinien (2, 2.1, 2.2, 2.n) bereitgestellt sind, aktuelle Zustandsinformationen des Gebäudesystems (1), und/oder Historieninformationen, und/oder Projektierungsinformationen, und/oder Diagnoseinformationen umfassen.

6. Gerät (10, 10.1, 10.2, 10.m, 10.n) nach Anspruch 4,
**dadurch gekennzeichnet, dass** das Gerät (10) die Informationen über den Netzwerkanschluss (11) an ein übergeordnetes Building Management System (5), und/oder an ein übergeordnetes Visualisierungssystem (5.1), und/oder an Dienste, die über das Internet bereitgestellt werden, und/oder an mobile Kommunikationseinrichtungen (5.n) bereitstellt.

7. Gerät (10, 10.1, 10.2, 10.m, 10.n) nach Anspruch 1,
**dadurch gekennzeichnet, dass** das Gerät (10.1) eine Funktionsbaugruppe (15) mit Routing-Funktion umfasst, um Informationen zwischen unterschiedlichen Feldbuslinien (2, 2.1, 2.2, 2.n, 2.m) weiterzuleiten.

8. Gerät (10, 10',10.1, 10.2, 10.m, 10.n) nach Anspruch 7,
**dadurch gekennzeichnet, dass** die Funktionsbaugruppe (15) mit Routing-Funktion die Informationen zwischen unterschiedlichen Feldbuslinien (2.n, 2.m), die an dem Feldbusanschluss (12) des Gerätes (10') angeschlossen sind, weiterleitet.

9. Gerät (10, 10', 10.1, 10.2, 10.m, 10.n) nach einem der vorigen Ansprüche,
**dadurch gekennzeichnet, dass** das Gerät (10, 10') eine Funktionsbaugruppe mit Kommunikationssteuerungsfunktion umfasst, die die Kommunikationslast auf den über den Feldbusanschluss (12) angeschlossenen untergeordneten Feldbuslinien (2, 2.1, 2.n) begrenzt und damit eine Überlastung der Kommunikation auf den untergeordneten Feldbuslinien (2, 2.1, 2.n) verhindert.

10. Gerät (10, 10', 10.1, 10.2, 10.m, 10.n) nach einem der vorigen Ansprüche,
**dadurch gekennzeichnet, dass** das Gerät mit einem Gehäuse in der Form eines Reiheneinbaugerätes der Gebäudeinstallationstechnik ausgebildet ist.

11. Gerät (10, 10', 10.1, 10.2, 10.m, 10.n) nach einem der vorigen Ansprüche,
**dadurch gekennzeichnet, dass** das Gerät (10) dazu eingerichtet ist, Anfragen eines Clients (5.n) zu Informationen, die in einem anderen der Geräte (10.1, 10.2, 10.m, 10.n) vorliegen, an dieses Gerät (10.1, 10.2, 10.m, 10.n) weiterzugegeben, so dass das von dem Client (5.n) angefragte Gerät (10.1, 10.2, 10.m, 10.n) die Anfrage abschließend beantwortet.

12. Gerät (10, 10', 10.1, 10.2, 10.m, 10.n) nach einem der vorigen Ansprüche,
**dadurch gekennzeichnet, dass** das Synchronisieren der Geräte (10, 10.1, 10.2, 10.m, 10.n) ein Synchronisieren der Zugriffsrechte beinhaltet.

13. Gerät (10, 10', 10', 10.1, 10.2, 10.m, 10.n) nach einem der vorigen Ansprüche,
**dadurch gekennzeichnet, dass** das Synchronisieren der Geräte (10, 10.1, 10.2, 10.m, 10.n) ein Synchronisieren der Uhrzeit beinhaltet, und/oder
dass Informationen, die in den Geräten (10, 10.1, 10.2, 10.m, 10.n) gespeichert sind, zusammen mit einem eindeutigen Zeitstempel gespeichert werden.

14. System (1) der Gebäudetechnik, welches umfasst
einen Feldbus der Gebäudetechnik mit wenigstens einer Feldbuslinie (2, 2.1, 2.2, 2.n) und
wenigstens einem an der Feldbuslinie (2, 2.1, 2.2, 2.n) angeschlossenen Busgerät (3, 3.1), und
wenigstens ein Gerät (10, 10', 10', 10.1, 10.2, 10.m, 10.n) nach einem der vorigen Ansprüche zur Verbindung mit einem übergeordnetes Datennetzwerk (4) mit wenigstens einem Client (5, 5.1, 5.n),
**dadurch gekennzeichnet, dass**
das Gerät (10, 10', 10', 10.1, 10.2, 10.m, 10.n) eine Synchronisationsverbindung (16) und das System (1) einen Backbone (9) aufweist, unter Nutzung derer sich Geräte (10, 10.1, 10.2, 10.m, 10.n) in dem Gebäudesystem (1') untereinander kontinuierlich ganz oder teilweise synchronisieren, so dass die in den Geräten (10, 10.1, 10.2, 10.m, 10.n) gespeicherten Informationen ganz oder teilweise gleich sind.

## Claims

1. Device (10, 10.1, 10.2, 10.m, 10.n) for the implementation of a distributed server structure in a building system (1),
wherein the building system (1) comprises a fieldbus which has at least one fieldbus line (2, 2.1, 2.2, 2.n) to which at least one bus device (3, 3.1) is connected, wherein by means of a data network that is at a higher level than the building system (1), at least one client (5, 5.1, 5.n) can access the fieldbus via a network connection (4), wherein the device has a network port (11) for communicating with at least one client (5, 5.1, 5.n) via a network connection (4), the device has a functional module (17) having a server function, and therefore the device is designed to provide information from the fieldbus to the at least one client (5, 5.1, 5.n), the device (10, 10.1, 10.2, 10.m, 10.n) has at least one fieldbus port (12) for communicating with the fieldbus, and
the device (10, 10.1, 10.2, 10.m, 10.n) has an internal memory (13), which contains an at least partial process image of the fieldbus line (2, 2.1, 2.2, 2.n) connected to the fieldbus,
**characterized in that**
the device (10) has a synchronization connection (16), with the use of which the devices (10, 10.1, 10.2, 10.m, 10.n) in the building system (1') are continuously synchronized with one another either entirely or partially, with the result that all or some of the stored information is identical.

2. Device (10, 10.1, 10.2, 10.m, 10.n) according to Claim 1, **characterized in that** the network port (11) is a LAN port, in particular an Ethernet port.

3. Device (10, 10.1, 10.2, 10.m, 10.n) according to Claim 1, **characterized in that** the fieldbus port (11) is a KNX port or a LON port or a CAN port or an Ethernet port or a Powerline port or a radio port or an EIA-485 port.

4. Device (10, 10.1, 10.2, 10.m, 10.n) according to any of the previous claims, **characterized in that** information provided by the lower-level fieldbus line(s) (2, 2.1, 2.2, 2.n) is buffered in the internal memory (13), and **in that** the device (10) provides this information via the network port (11) to clients (2, 2.1, 2.2, 2.n) that are connected via the higher-level data network (4).

5. Device (10, 10.1, 10.2, 10.m, 10.n) according to Claim 4, **characterized in that** the information provided by the lower-level fieldbus line(s) (2, 2.1, 2.2, 2.n) comprises current status information on the building system (1) and/or history data and/or design data and/or diagnostic data.

6. Device (10, 10.1, 10.2, 10.m, 10.n) according to Claim 4, **characterized in that** the device (10) provides the information via the network port (11) to a higher-level building management system (5) and/or to a higher-level visualization system (5.1) and/or to services provided via the Internet and/or to mobile communications devices (5.n).

7. Device (10, 10.1, 10.2, 10.m, 10.n) according to Claim 1, **characterized in that** the device (10.1) comprises a functional module (15) having a routing function in order to route information between different fieldbus lines (2, 2.1, 2.2, 2.n, 2.m).

8. Device (10, 10', 10.1, 10.2, 10.m, 10.n) according to Claim 7, **characterized in that** the functional module (15) having a routing function routes the information between different fieldbus lines (2.n, 2.m) which are connected to the fieldbus port (12) of the device (10').

9. Device (10, 10', 10.1, 10.2, 10.m, 10.n) according to any of the previous claims, **characterized in that** the device (10, 10') comprises a functional module having a communications control function, which limits the communications load on the lower-level fieldbus lines (2, 2.1, 2.n) connected via the fieldbus port (12) and hence prevents a communications overload on the lower-level fieldbus lines (2, 2.1, 2.n).

10. Device (10, 10', 10.1, 10.2, 10.m, 10.n) according to any of the previous claims, **characterized in that** the device, by means of a housing, is designed in the form of a rail-mounting device for building installation engineering.

11. Device (10, 10', 10.1, 10.2, 10.m, 10.n) according to any of the previous claims, **characterized in that** the device (10) is configured to forward requests by a client (5.n) for information available in another of the devices (10.1, 10.2, 10.m, 10.n) to this device (10.1, 10.2, 10.m, 10.n), with the result that the device (10.1, 10.2, 10.m, 10.n) to which the client (5.n) sends the request finally responds to the request.

12. Device (10, 10', 10.1, 10.2, 10.m, 10.n) according to any of the previous claims, **characterized in that** the synchronizing of the devices (10, 10.1, 10.2, 10.m, 10.n) involves synchronizing the access rights.

13. Device (10, 10', 10', 10.1, 10.2, 10.m, 10.n) according to any of the previous claims, **characterized in that** the synchronizing of the devices (10, 10.1, 10.2, 10.m, 10.n) involves synchronizing the time, and/or **in that** information stored in the devices (10, 10.1, 10.2, 10.m, 10.n) is stored together with a unique time stamp.

14. Building engineering system (1), which comprises
a building engineering fieldbus having at least one fieldbus line (2, 2.1, 2.2, 2.n) and
at least one bus device (3, 3.1) connected to the fieldbus line (2, 2.1, 2.2, 2.n), and
at least one device (10, 10', 10', 10.1, 10.2, 10.m, 10.n) according to any of the previous claims for connecting to a higher-level data network (4) comprising at least one client (5, 5.1, 5.n),
**characterized in that**
the device (10, 10', 10', 10.1, 10.2, 10.m, 10.n) has a synchronization connection (16) and the system (1) has a backbone (9), with the use of which the devices (10, 10.1, 10.2, 10.m, 10.n) in the building system (1') are continuously synchronized with one another either entirely or partially, with the result that all or some of the information stored in the devices (10, 10.1, 10.2, 10.m, 10.n) is identical.

## Revendications

1. Appareil (10, 10.1, 10.2, 10.m, 10.n) de réalisation d'une structure de serveur distribuée dans un système de bâtiment (1),
le système de bâtiment (1) comportant un bus de terrain qui est configuré avec au moins une ligne de bus de terrain (2, 2.1, 2.2, 2.n) à laquelle est connecté au moins un périphérique de bus (3, 3.1), au moins un client (5, 5.1, 5.n) pouvant accéder au bus de terrain par le biais d'une connexion de réseau (4) au moyen d'un réseau de données auquel est subordonné le système de bâtiment (1),
l'appareil possédant un port de réseau (11) servant à la communication avec au moins un client (5, 5.1, 5.n) par le biais d'une connexion de réseau (4),
l'appareil possédant un sous-ensemble fonctionnel (17) ayant une fonction de serveur, de sorte que l'appareil est configuré pour fournir des informations depuis le bus de terrain à l'au moins un client (5, 5.1, 5.n), l'appareil (10, 10.1, 10.2, 10.m, 10.n) possédant au moins un port de bus de terrain (12) servant à la communication avec le bus de terrain, et
l'appareil (10, 10.1, 10.2, 10.m, 10.n) possédant une mémoire interne (13) qui contient une image de processus au moins partielle de la ligne de bus de terrain (2, 2.1, 2.2, 2.n) connectée au bus de terrain,
**caractérisé en ce que**
l'appareil (10) possède une liaison de synchronisation (16), qu'utilisent des appareils (10, 10.1, 10.2, 10.m, 10.n) dans le système de bâtiment (1') pour se synchroniser entièrement ou partiellement continuellement entre eux, de sorte que les informations mémorisées sont entièrement ou partiellement identiques.

2. Appareil (10, 10.1, 10.2, 10.m, 10.n) selon la revendication 1, **caractérisé en ce que** le port de réseau (11) est un port LAN, notamment un port Ethernet.

3. Appareil (10, 10.1, 10.2, 10.m, 10.n) selon la revendication 1, **caractérisé en ce que** le port de bus de terrain (11) est un port KNX ou un port LON ou un port CAN ou un port Ethernet ou un port de courant porteur ou encore un port radioélectrique ou un port EIA 485.

4. Appareil (10, 10.1, 10.2, 10.m, 10.n) selon l'une des revendications précédentes, **caractérisé en ce que** dans la mémoire interne (13) sont mémorisées temporairement des informations qui sont fournies par la ou les lignes de bus de terrain (2, 2.1, 2.2, 2.n) subordonnées, et **en ce que** l'appareil (10) fournit ces informations par le biais du port de réseau (11) aux clients (2, 2.1, 2.2, 2.n) qui sont raccordés par le biais du réseau de données (4) de niveau supérieur.

5. Appareil (10, 10.1, 10.2, 10.m, 10.n) selon la revendication 4, **caractérisé en ce que** les informations qui sont fournies par la ou les lignes de bus de terrain (2, 2.1, 2.2, 2.n) subordonnées comprennent des informations d'état actuelles du système de bâtiment (1) et/ou des informations historiques et/ou des informations de projection et/ou des informations de diagnostic.

6. Appareil (10, 10.1, 10.2, 10.m, 10.n) selon la revendication 4, **caractérisé en ce que** l'appareil (10) fournit les informations par le biais du port de réseau (11) à un système de gestion de bâtiment (5) de niveau supérieur et/ou à un système de visualisation (5.1) de niveau supérieur et/ou à des services qui sont fournis par le biais de l'Internet et/ou à des dispositifs de communication mobiles (5.n).

7. Appareil (10, 10.1, 10.2, 10.m, 10.n) selon la revendication 1, **caractérisé en ce que** l'appareil (10.1) comporte un sous-ensemble fonctionnel (15) ayant une fonction de routage afin de retransmettre des informations entre différentes lignes de bus de terrain (2, 2.1, 2.2, 2.n, 2.m).

8. Appareil (10, 10', 10.1, 10.2, 10.m, 10.n) selon la revendication 7, **caractérisé en ce que** le sous-ensemble fonctionnel (15) ayant une fonction de routage retransmet les informations entre différentes lignes de bus de terrain (2.n, 2.m) qui sont connectées au port de bus de terrain (12) de l'appareil (10').

9. Appareil (10, 10', 10.1, 10.2, 10.m, 10.n) selon l'une des revendications précédentes, **caractérisé en ce que** l'appareil (10, 10') comporte un sous-ensemble fonctionnel ayant une fonction de commande de communication, qui limite la charge de communication sur les lignes de bus de terrain (2, 2.1, 2.n) subordonnées connectées par le biais du port de bus de terrain (12) et évite ainsi une surcharge de la communication sur les lignes de bus de terrain (2, 2.1, 2.n) subordonnées.

10. Appareil (10, 10', 10.1, 10.2, 10.m, 10.n) selon l'une des revendications précédentes, **caractérisé en ce que** l'appareil est réalisé avec un boîtier sous la forme d'un appareillage modulaire de la domotique.

11. Appareil (10, 10', 10.1, 10.2, 10.m, 10.n) selon l'une des revendications précédentes, **caractérisé en ce que** l'appareil (10) est conçu pour retransmettre à un autre appareil (10.1, 10.2, 10.m, 10.n) des demandes d'un client (5.n) pour des informations qui se trouvent dans cet appareil (10.1, 10.2, 10.m, 10.n), de sorte que l'appareil (10.1, 10.2, 10.m, 10.n) interrogé par le client (5.n) répond finalement à la demande.

12. Appareil (10, 10', 10.1, 10.2, 10.m, 10.n) selon l'une des revendications précédentes, **caractérisé en ce que** la synchronisation des appareils (10, 10.1, 10.2, 10.m, 10.n) contient une synchronisation des droits d'accès.

13. Appareil (10, 10', 10', 10.1, 10.2, 10.m, 10.n) selon l'une des revendications précédentes, **caractérisé en ce que** la synchronisation des appareils (10, 10.1, 10.2, 10.m, 10.n) contient une synchronisation de l'heure et/ou **en ce que** des informations qui sont mémorisées dans les appareils (10, 10.1, 10.2, 10.m, 10.n) sont mémorisées conjointement avec une estampille temporelle univoque.

14. Système (1) domotique, qui comprend
un bus de terrain domotique comprenant au moins une ligne de bus de terrain (2, 2.1, 2.2, 2.n) et
au moins un périphérique de bus (3, 3.1) connecté à la ligne de bus de terrain (2, 2.1, 2.2, 2.n), et
au moins un appareil (10, 10', 10', 10.1, 10.2, 10.m, 10.n) selon l'une des revendications précédentes destiné à la liaison avec un réseau de données (4) de niveau supérieur et qui comprend au moins un client (5, 5.1, 5.n),
**caractérisé en ce que**
l'appareil (10, 10', 10', 10.1, 10.2, 10.m, 10.n) possède une liaison de synchronisation (16) et le système (1) un réseau central (9) qu'utilisent des appareils (10, 10.1, 10.2, 10.m, 10.n) dans le système de bâtiment (1') pour se synchroniser entièrement ou partiellement continuellement entre eux, de sorte que les informations mémorisées dans les appareils (10, 10.1, 10.2, 10.m, 10.n) sont entièrement ou partiellement identiques.
